# EUROPÄISCHE PATENTSCHRIFT

(11) **EP 2 129 955 B1**
(45) Veröffentlichungstag und Bekanntmachung des Hinweises auf die Patenterteilung: **02.01.2013**
(21) Anmeldenummer: 08715514.9
(22) Anmeldetag: 22.02.2008
(51) Int. Cl.: F16L 37/092, F16L 33/22

(54) **STECKVERBINDER**
PLUG-IN CONNECTOR
CONNECTEUR ENFICHABLE

(30) Priorität: 28.02.2007 DE 102007010164
(43) Veröffentlichungstag der Anmeldung: 09.12.2009
(73) Patentinhaber: TECE GmbH, 48282 Emsdetten (DE)
(72) Erfinder: HÜSER, Andreas, 48282 Emsdetten (DE); FITZ, Waldemar, 48268 Greven (DE); ALTEPOST, Olaf, 48282 Emsdetten (DE)
(74) Vertreter: Lippert, Stachow & Partner
(86) Internationale Anmeldenummer: PCT/DE2008/000322
(87) Internationale Veröffentlichungsnummer: WO 2008/104157

(56) Entgegenhaltungen:
- WO-A1-03/044416
- DE-A1- 10 058 967
- DE-A1- 19 945 721
- DE-C1- 19 755 743

## Beschreibung

Die Erfindung betrifft einen Steckverbinder mit einem Stützkörper, einem Fixierteil zur Befestigung eines freien Endes einer Rohrleitung auf dem Stützkörper, einem zwischen dem Fixierteil und einem Bereich des Stützkörpers, auf den die Rohrleitung aufsteckbar ist, angeordneten Klemmelement, das relativ zum Fixierteil in Richtung auf dessen freies Ende hin axial bewegbar ist und infolge dieser Bewegung ein radial nach innen weisender Wandbereich des Klemmelements gegen die Außenseite der Rohrleitung pressbar ist, und einem innerhalb des Fixierteils angeordneten Krallelement, das an seiner radial nach innen weisenden Seite mindestens eine Kralle zum Eingriff in oder Anpressen an die Außenseite der Rohrleitung aufweist, die so ausgelegt ist, dass das freie Ende der Rohrleitung nach Befestigung des Fixierteils am Stützkörper auf diesen aufsteckbar und dabei durch die Kralle nicht oder in einem nur unerheblichen Maße beschädigbar ist.

Steckverbinder werden insbesondere für Warm- und Kaltwasserleitungen für den Sanitär- und Heizungsbereich in der Haustechnik oder auch für Druckluftleitungen und dergleichen eingesetzt, um auf einfache und schnelle Weise eine Verbindung zwischen einer Rohrleitung und einem Fittingkörper herzustellen. Sie eignen sich beilspielsweise als Direkt.anbind1.lng an Fußbodenheizungsverteiler.

Ein Steckverbinder der eingangs genannten Art ist zum Beispiel aus der WO 03/044416 A1 bekannt. Das Krallelement dieses Steckverbinders ist als ein teilkreisförmige Zähne aufweisender Zahnring aus Metall gebildet. Der Zahnring stützt sich in Richtung des Rohrleitungsendes axial gegen eine Stirnseite einer zwischen dem Fixierteil und dem Stützkörper angeordneten Innenhülse ab. Die nach innen und in Richtung auf das Rohrleitungsende geneigt verlaufenden Zähne sind so am Zahnring angeordnet, dass sie bei Abstützung des Zahnrings durch die Innenhülse einen Abstand zu einem Ringflansch des Stützkörpers aufweisen, gegen den das Rohrleitungsende nach dem Aufstecken der Rohrleitung auf den rohrförmigen Stützkörper anlegbar ist.

Wird das freie Ende der Rohrleitung im drucklosen Zustand auf den rohrförmigen Stützkörper aufgesteckt, so schiebt sich das als Zahnring ausgebildete Krallelement über das Rohrleitungsende. Dabei werden die Zähne leicht nach außen gebogen. Wird danach die Rohrleitung mit Druck beaufschlagt oder wird an der Rohrleitung gezogen, verschiebt sich diese etwas vom Ringflansch des Stützkörpers weg, wobei die Zähne des Zahnrings sich in die Oberfläche der Rohrleitung eingraben und somit der Zahnring an der Verschiebung teilnimmt. An der vom Rohrleitungsende abgewandten Seite des Zahnrings ist ein an der Außenseite konisch geformtes Klenunelement verschiebbar angeordnet, das mit einer konischen Innenseite des Fixierteils zusammenwirkt. Bei der Verschiebung der Rohrleitung vom Ringflansch des Stützkörpers weg wird die Rohrleitung aufgrund der im Zahnring angeordneten Zähne und mit im Klemmelement angeordneten Vorsprüngen festgehalten, so dass eine sichere Verbindung zwischen der Rohrleitung und dem Stützköper entsteht.

Der aus der genannten Druckschrift bekannte Steckverbinder ist lösbar, indem das Fixierteil und die aus mehreren halbkreisförmigen Schalenteilen zusammengesetzte Innenhülse und somit die Rohrleitung vom Stützkörper entfernt werden können. Das als Zahnring ausgebildeten Krallelement lässt sich jedoch vom Rohrleitungsende nicht entfernen, ohne dass die Rohrleitung und der Zahnring dabei beschädigt werden.

Ein Steckverbinder der eingangs genannten Art ist ebenfalls aus der DE 199 45 721 A1 bekannt. Das als Klemmring mit einem axialen Schlitz ausgebildete Klemmelement weist ebenfalls eine konisch geformte Außenseite auf, die mit einer konisch ausgebildeten Klemmfläche des Fixierteils zusammenwirkt. Wird der Klemmring aufgrund einer auf die Rohrleitung wirkenden Zugspannung, z. B. beim Zurückziehen der Rohrleitung, zusammengedrückt, so wird die an der Innenseite des Klemmrings angeordnete Haltekralle in die Rohroberfläche eingepresst, wobei eine Beschädigung der Rohrleitungsoberfläche nicht auszuschließen ist.

Aus der DE 197 55 743 Cl und DE 100 58 967 A1 sind Rohrverbinder mit einem Grundköper, einem Fixierteil zur Befestigung eines freien Endes einer Rohrleitung auf dem Grundkörper, einem am Grundkörper und Fixierteil angeordneten Klemmelement und einem innerhalb des Fixierteils angeordneten Krallelement bekannt, wobei das Klemmelement relativ zum Fixierteil in Richtung auf dessen freies Ende hin axial bewegbar ist und infolge dieser Bewegung ein radial nach innen weisender Wandbereich des Klemmelements gegen die Außenseite der Rohrleitung pressbar ist und wobei das Krallelement an seiner nach innen weisenden Seite mindestens eine Kralle zum Eingriff in oder Anpressen an die Außenseite der Rohrleitung aufweist. Der Grundkörper weist jedoch keinen Bereich auf, auf den die Rohrleitung aufsteckbar ist. Daher handelt es sich bei den aus diesen Druckschriften bekannten Rohrverbindern nicht um gattungsgemäße Steckverbinder mit einem Stützkörper, der einen Bereich zum Aufstecken des freien Endes der Rohrleitung aufweist.

Bei den aus den beiden genannten Druckschriften bekannten Rohrverbindern wird die Rohrleitung zunächst in den Verbinder eingesteckt und daraufhin das Fixierteil am Grundkörper befestigt. Dabei werden die Krallen in den Außenumfang der Rohrleitung eingedrückt, wobei sie sich praktisch verbeißen, so dass die Rohrleitung nicht mehr herausgezogen werden kann. Eine irreversible Beschädigung der Rohrleitungsoberfläche ist dabei ebenfalls die Regel.

Der vorliegenden Erfindung liegt die Aufgabe zugrunde, einen Steckverbinder der eingangs genannten Art mit axial nebeneinander angeordneten Klemm- und Krallelement so weiter zu entwickeln, dass diese Elemente ohne Beschädigung ihrer selbst und der Rohrleitung von dieser entfernt werden können.

Die Aufgabe wird erfindungsgemäß dadurch gelöst, dass bei einem Steckverbinder der eingangs genannten Art das Krallelement mit dem Klemmelement derart einstückig verbunden ist, dass bei radial einwärts gerichteter Bewegung des nach innen weisenden Wandbereichs des Klemmelements die von der Kralle auf die Rohrleitungsoberfläche übertragene Kraft im Wesentlichen konstant ist, so dass die Rohrleitungsoberfläche durch die Kralle nicht oder nur unerheblich beschädigbar ist.

Bei dem erfindungsgemäßen Steckverbinder wird das Rohrleitungsende, wie üblich, auf den Stützkörper aufgesteckt, wobei es an der mindestens einen Kralle des Krallelements vorbei geschoben wird. Die mindestens eine Kralle des Krallelements ist so ausgelegt, das sie beim Einschieben des Rohrleitungsendes einen geringen Widerstand auf die Rohrleitungsoberfläche ausübt, so dass diese nicht oder in einem nur unerheblichen Maße beschädigt wird. Beim Zurückschieben des Rohrleitungsendes ist die Widerstandkraft so bemessen, dass das Krallelement das an seiner vom Rohrleitungsende abgewandten Seite angeordnete Klemmelement mitbewegt, so dass, z.B. durch Zusammenwirken mit einer konischen Innenseite des Fixierteils, der nach innen weisende Wandbereich des Klemmelements gegen die Oberfläche der Rohrleitung gepresst und dadurch die Rohrleitung sicher im Steckverbinder gehalten wird. Weiterhin ist die mindestens eine Kralle des Krallelements so ausgelegt, dass ihr Widerstand gegen die Rohrleitungsoberfläche beim Verschieben des Krallelements zum freien Ende der Rohrleitung hin (wenn die Rohrleitung mit dem darauf sitzenden Krallelement vom Steckverbinder gelöst ist) ebenfalls zu, zu keinen oder nur unerheblichen Beschädigungen des Krallelements selbst und der Rohrleitungsoberfläche führt.

Das erfinderische Konzept ermöglicht es zudem, das Klemmelement so auszubilden, dass es beim Einschieben der Rohrleitung nicht an dieser anliegen muss. Es braucht somit nur der geringe Reibungswiderstand des Krallelements in der betreffenden Verschiebungsrichtung überwunden zu werden. Daher lässt sich das Rohrleitungsende relativ leicht in den erfindungsgemäßen Steckverbinder einstecken. Die erfindungsgemäße Konstruktion ermöglicht es weiterhin, nach Lösen des Fixierteils vom Stützkörper sowohl das Krallelement als auch das Rohrleitungsende unbeschädigt wieder zu verwenden. Die aus dem Stand der Technik bekannten Krallelemente aus Metall schädigen die Rohrleitungsoberfläche und müssen in der Regel ersetzt werden.

Die Haltekraft des Krallelements, die nach den vorstehend genannten Maßgaben sehr gering sein kann, ist beim Zurückschieben der Rohrleitung vom Ringflansch des Stützkörper weg im Wesentlichen konstant, auch während der radial einwärts gerichteten Bewegung des nach innen weisenden Wandbereichs des Klemmelements, z. B., wenn dieses mit der konischen Innenseite des Fixierteils zusammenwirkt. Das Krallelement hat beim erfindungsgemäßen Steckverbinder lediglich die Funktion, die Halterung der Rohrleitung durch das Klemmelement zu initiieren, bzw. zu induzieren. Das Krallelement hat selbst keine Haltefunktion für die Rohrleitung. Diese wird im Wesentlichen nur durch das Klemmelement ausgeübt.

Zweckmäßigerweise ist das Krallelement im Fixierteil mit einem bestimmten Spiel angeordnet. Aufgrund der Verbindung des Krallelements mit dem Klemmelement, so dass beide axial zueinander festgelegt sind, werden sowohl das Krall- als auch das Klemmelement beim Aufstecken des Rohrleitungsendes mit verschoben. Dadurch wird gewährleistet, dass das Klemmelement, das z.B. mit einer konischen Innenseite des Fixierteils zusammenwirkt, keine radial einwärts gerichtete Vorspannung beim Einschieben der Rohrleitung aufweist. Das mit dem Krallelement verbundene Klemmelement justiert sich beim Aufschieben der Rohrleitung in den Steckverbinder automatisch, so dass beim Aufstecken der Rohrleitung auf den Stützkörper nicht an der Rohrleitung anliegt. Der Innendurchmesser des Klemmelements im unbelasteten Zustand kann daher nur geringfügig größer als der Außendurchmesser der Rohrleitung bemessen sein. Beim Zurückziehen der Rohrleitung wird das Klemmelement durch das Krallelement in eine Position gezogen, in der der nach innen weisende Wandbereich des Klemmelements sich radial einwärts bewegt und die zur sicheren Verbindung erforderliche Haltekraft auf die Rohrleitung, ausübt, z.B. indem das Klemmelement mit einer konischen Innenseite des Fixierteils entsprechend zusammenwirkt. Das Krallelement weist vorzugsweise ein umfänglich geschlossenes ringförmiges Teil auf, an dessen einer Stirnseite mindestens ein axial verlaufender Finger mit einer radial einwärts gerichteten Kralle, die über die Innenseite des ringförmigen Teils radial einwärts vorsteht, angeordnet ist. Zweckmäßigerweise sind mehrere Finger mit vorzugsweise an ihren freien Enden angeordneten Krallen vorgesehen. Die Finger können in gleichen Abständen über den Umfang des ringförmigen Teils verteilt angeordnet sein. In einer vorteilhaften Ausbildung der Erfindung ist das Krallelement axial an der vom freien Ende des Fixierteils wegweisenden Seite des Klemmelements angeordnet. Der mindestens eine Finger mit Kralle kann sich axial in Richtung auf das Klemmelement erstrecken. Die Kralle weist in diesem Fall zweckmäßigerweise eine vom freien Ende des Fingers radial einwärts geneigt in Richtung auf das ringförmige Teil des Krallelements verlaufende Innenseite auf. Weiterhin kann die Kralle eine im Wesentlichen radiale zum Ringteil weisende Flanke aufweisen. Der mindestens eine Finger mit der Kralle kann auch in axialer Richtung vom Klemmelement weg verlaufen. In diesem Falle kann die Kralle eine zum Ende des Fingers radial einwärts geneigte Innenseite und daran anschließende, im Wesentlichen radiale Flanke aufweisen.

Das Krallelement ist bevorzugt aus Kunststoff gefertigt, um so schonend wie möglich an der Rohrleitungsoberfläche anzugreifen. Insbesondere kann es sich um einen Hochleistungskunststoff, wie z.B. PPSU, handeln.

Das Krallelement ist mit dem Klemmelement einstückig verbunden. Das Krallelement und das Klemmelement können somit als ein Kunststoffteil, z.B. durch Spritzguss, hergestellt werden.

Da das Krall- und das Klemmelement unterschiedliche Funktionen, wie vorstehend ausgeführt, erfüllen, kann das einstückige Teil im Zweikomponenten-Spritzgiesverfahren auch mit unterschiedlichen, an die Funktionen angepassten Kunststoffmaterialien hergestellt werden.

Insbesondere können das Krall- und das Klemmelement aus einem Hochleistungskunststoff, z.B. PPSU, gefertigt sein.

In einer bevorzugten Ausführung steht die mindestens eine Kralle des Krallelements radial einwärts über den nach innen weisenden Wandbereich des Klemmelements vor. Hierdurch können die beiden Elemente, wie schon oben angeführt, so ausgelegt sein, dass beim Einführen des Rohrleitungsendes in den Steckverbinder nur die Kralle auf die Rohrleitungsoberfläche einwirkt, jedoch nicht das Klemmelement, dessen Innendurchmesser so ausgelegt ist, dass er etwas größer ist als der Außendurchmesser der Rohrleitung.

Das Krallelement und das Klemmelement sind im Fixierteil vorzugsweise so angeordnet, dass das Krallelement an der vom freien Ende des Fixierteils wegweisenden Seite des Klemmelements angebracht ist.

Das Klemmelement kann in Form einer an seiner Außenseite konischen Hülse ausgebildet sein, die sich in Richtung auf das freie Ende des Fixierteils hin verjüngt, wobei die konische Außenseite des Klemmelements mit einem entsprechend konischen Bereich der Innenseite des Fixierteils korrespondiert.

Zweckmäßigerweise ist das als Hülse ausgebildete Klemmelement mit mindestens einem axial verlaufenden, durchgehenden Schlitz versehen. Der Schlitz ermöglicht ein flexibles Zusammenziehen des Klemmelements über seine gesamte axiale Erstreckung aufgrund seines Zusammenwirkens mit dem konischen Bereich der Innenseite des Fixierteils.

In einer vorteilhaften Weiterbildung der Erfindung ist das Krallelement über mindestens einen in radialer Richtung flexiblen Steg mit dem Klemmelement verbunden. Der flexible Steg ist so ausgelegt, dass bei radial einwärts gerichteter Bewegung des nach innen weisenden Wandbereichs des Klemmelements eine nur unerhebliche und zu vernachlässigende radiale Kraft auf die mindestens eine Kralle des Krallelements ausgeübt wird. Dabei soll die von der Kralle auf die Rohrleitungsoberfläche übertragene Kraft derart unerheblich sein, dass die Kralle die Rohrleitungsoberfläche nicht beschädigt. In einer weiteren Ausbildung der Erfindung kann das Krallelement ein ringförmiges Teil aufweisen, von dem aus sich in axialer Richtung Finger erstrecken, an deren radial einwärts liegenden Innenseiten jeweils eine Kralle angeordnet ist.

Die Finger können sich zweckmäßigerweise in Richtung auf das Klemmelement hin erstrecken. Die Krallen sind dann vorzugsweise im Bereich der freien Enden der Finger angeordnet.

Dabei kann der Außendurchmesser des Ringteils des Krallelements kleiner als der größte Außendurchmesser des Klemmelements sein. Das ringförmige Krallelement kann somit mit einem geringen radialen Spiel im Fixierteil angeordnet sein.

Weiterhin kann die Außenseite des Ringteils des Krallelements radial nach außen gegenüber den Fingern des Krallelements vorstehen. Somit haben die Finger, insbesondere ihre mit den Krallen versehenen Bereiche, ein radiales Spiel, um sich beim Einschieben der Rohrleitung in das hülsenförmige Teil aus Klemm- und Krallelement radial nach außen zu bewegen.

In einem bevorzugten Ausführungsbeispiel ist an zwei diagonal gegenüberliegenden Stellen der Stirnseite des Klemmelements mit größerem Außendurchmesser jeweils ein sich axial erstreckender Steg vorgesehen, der an dem Ringteil des Krallelements endet, wobei zwischen den beiden Stegen sich jeweils mindestens ein Finger erstreckt. Unter Umständen können auch drei oder mehr Stege vorgesehen sein, die das hülsenförmige Klemmelement mit dem ringförmigen Krallelement verbinden.

Zwischen den Stegen sind vorzugsweise zwei Finger des Krallelements vorgesehen. Es kann jedoch zweckmäßig sein, auch mehr als zwei Finger anzuordnen.

Bei mindestens zwei das Klemm- und Krallelement verbindenden Stegen kann das Klemmelement eine entsprechende Zahl axial durchgehender Schlitze aufweisen. Diese können jeweils mittig zwischen den Stegen verlaufen. Durch mehrere Schlitze ist das Klemmelement in radialer Richtung flexible mit dem Krallelement verbunden, so dass es durch das Krallelement leichter in den konischen Bereich der Innenseite des Fixierteils hinein gezogen und dabei radial einwärts zusammengezogen werden kann.

In einer bevorzugten Weiterbildung der Erfindung kann die Außenseite des Klemmelements mit dem größten Außendurchmesser radial nach außen gegenüber den Stegen vorstehen. Somit weisen die Stege ein geringes radiales Spiel im Fixierteil auf. Ihre Innenseite kann fluchtend zur Innenseite des hülsenförmigen Klemmelements angeordnet sein, wobei die Stege relativ dünn gestaltet sind, um eine bestmögliche radiale Flexibilität zu gewährleisten.

Bei einer zweckmäßigen Weiterbildung der Erfindung verlaufen die Innenseiten der Krallen von den Enden der Finger einwärts geneigt in Richtung des Ringteils des Krallelements. Sie können weiterhin eine im Wesentlichen radiale zum Ringteil weisende Flanke aufweisen.

Die Haltefunktion des Klemmelements kann dadurch verbessert werden, dass an seiner Innenseite mindestens ein Vorsprung vorgesehen ist. Zweckmäßigerweise weist das Klemmelement an seiner Innenseite mehrere axial beabstandete in Umfangsrichtung verlaufende Vorsprünge auf.

Das Fixierteil ist bevorzugt als Hülse ausgebildet. Zwecks lösbarer Verbindung mit dem Stützkörper kann das Fixierteil auf den Stützkörper aufschraubbar sein. Auch andere lösbare Verbindungen, wie Schnappverbindungen, kommen in Betracht. Sollte es zweckmäßig sein, kann das Fixierteil auch unlösbar auf dem Stützkörper befestigbar sein.

Ein bevorzugtes Ausführungsbeispiel der vorliegenden Erfindung wird im Folgenden anhand der Zeichnung näher erläutert. In der Zeichnung zeigen:
- Fig. 1: eine Explosionszeichnung eines Ausführungsbeispiels des Steckverbinders,
- Fig. 2: einen Längsschnitt durch die Explosionszeichnung gemäß Figur 1
- Fig. 3: einen Längsschnitt durch den Steckverbinder gemäß Figur 1 im zusammengesteckten Zustand,
- Fig. 4: eine perspektivische Darstellung des Fixierteils des Steckverbinders gemäß Figur 1,
- Fig. 5: einen Längsschnitt durch das in Figur 4 dargestellte Fixierteil,
- Fig. 6: eine perspektivische Darstellung der Einheit aus Klemmelement und Krallelement,
- Fig. 7: eine gegenüber Fig. 6 gedrehte perspektivische Darstellung der Einheit aus Klemmelement und Krallelement,

- Fig. 8: eine stirnseitige Ansicht auf das Krallelement der in den Figuren 6 und 7 dargestellten Einheit,
- Fig. 9: eine stirnseitige Ansicht auf das Klemmelement der in den Figuren 6 und 7 dargestellten Einheit,
- Fig. 10: eine Seitenansicht auf die Einheit in Richtung des Pfeils A in Fig. 9,
- Fig. 11: eine Seitenansicht der Einheit in Richtung des Pfeils B in Fig. 9 und
- Fig. 12: einen Längsschnitt durch die in Figur 11 gezeigte Einheit.

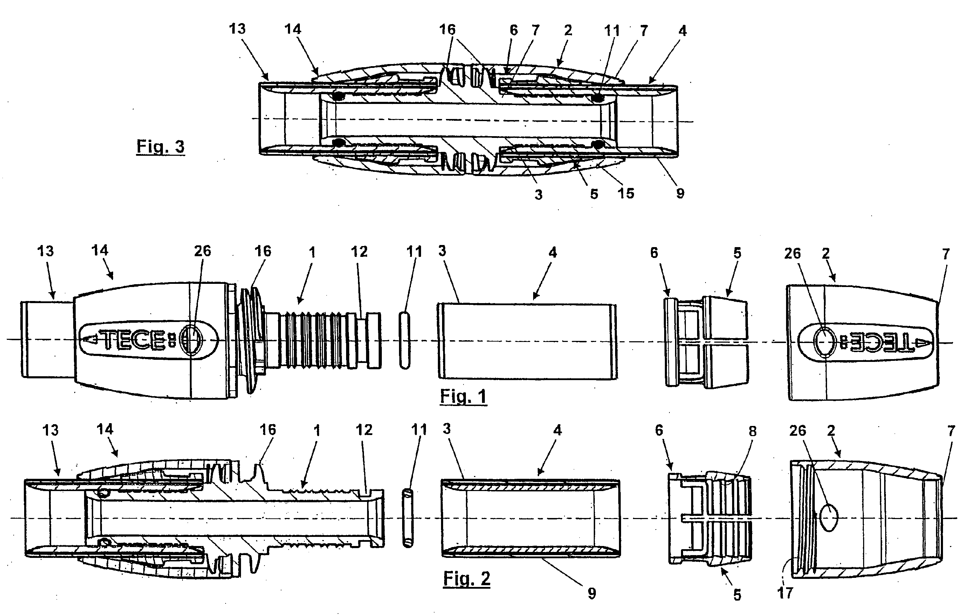

Wie insbesondere aus Figur 1 hervorgeht, besteht der in der Zeichnung dargestellte Steckverbinder aus einem Stützkörper 1, einem Fixierteil 2 zur Befestigung eines freien Endes 3 einer Rohrleitung 4 auf dem Stützkörper 1, einem zwischen dem Fixierteil 2 und dem Stützkörper 1 angeordneten Klemmelement 5 und einem innerhalb des Fixierteils 2 angeordneten Krallelement 6. Das Klemmelement 5 ist relativ zum Fixierteil 2 in Richtung auf dessen freien Ende 7 hin axial bewegbar, wobei in Folge dieser Bewegung ein radial nach innen weisender Wandbereich 8 des Klemmelements 5 gegen die Außenseite 9 der Rohrleitung 4 pressbar ist. Das Krallelement 6 weist an seiner radial nach innen weisenden Seite mindestens eine Kralle 10 zum Eingriff in oder Anpressen an die Außenseite 9 der Rohrleitung 4 auf.

Um die Rohrleitung 4 sicher auf dem Stützkörper 1 zu befestigen, ist ferner ein Dichtring 11 vorgesehen, der in einer Nut 12 in der Nähe des freien Endes des Stützkörpers 1 befestigbar ist.

Wie aus den Figuren 1 bis 3 hervorgeht, ist der Stützkörper 1 als Doppelsteckverbinder ausgebildet, wobei eine zweite Rohrleitung 13 mit einem zweiten Fixierteil 14 auf der in den Figuren 1 bis 3 links dargestellten Hälfte des Stützkörpers 1 in gleicher Weise befestigt ist wie die Rohrleitung 4 mit Hilfe des Fixierteils 2 auf der rechten Hälfte des Stützkörpers 1. Die beiden Hälften des Stützkörpers 1 sind symmetrisch zu einander ausgebildet.

Die Montage des Steckverbinders auf der rechten Seite der Figuren 1 bis 3 geschieht wie folgt. Zunächst wird der als O-Ring ausgebildete Dichtring 11 auf den Stützkörper 1 gezogen und in der Nut 12 festgelegt. Danach wird die aus dem Klemmelement 5 und dem Krallelement 6 bestehende Einheit über den Stützkörper 1 geschoben und das Fixierteil 2 am Stützkörper 1 befestigt. Zur Befestigung dient ein auf dem Stützkörper 1 angebrachtes Außengewinde 16, auf das das Fixierteil 2 mit einem Innengewinde 17 aufgeschraubt werden kann. Dies erlaubt die Lösbarkeit des Fixierteils 2 vom Stützkörper 1 und somit die Wiederverwendbarkeit des Steckverbinders. Weiterhin bietet die Schraubverbindung die Möglichkeit, auf den Stützkörper 1 anstelle des Fixierteils 2 eine (in der Zeichnung nicht dargestellte) Edelstahlhülse aufzuschrauben, die zur radialen Verpressung genutzt werden kann. Der gleiche Stützkörper 1 kann somit alternativ als Steckverbinder oder Pressverbinder verwendet werden.

Die Einheit aus Klemmelement 5 und Krallelement 6 hat, wie in Figur 3 gezeigt ist, im Fixierteil 2 ein geringes Spiel. Wenn die Rohrleitung 4 auf den Stützkörper 1 aufgeschoben wird, justiert sich diese Einheit automatisch und wird bei einem Zurückziehen der Rohrleitung 4 durch das Klemmelement 5 in einen konischen Bereich 16 des Fixierteils 2 gezogen. Dadurch wird, wie im Folgenden noch näher zu beschreiben ist, das Klemmelement 5 radial einwärts zusammengezogen und hält durch den auf die Oberfläche der Rohrleitung 4 ausgeübten Druck die Rohrleitung 4 sicher im Steckverbinder.

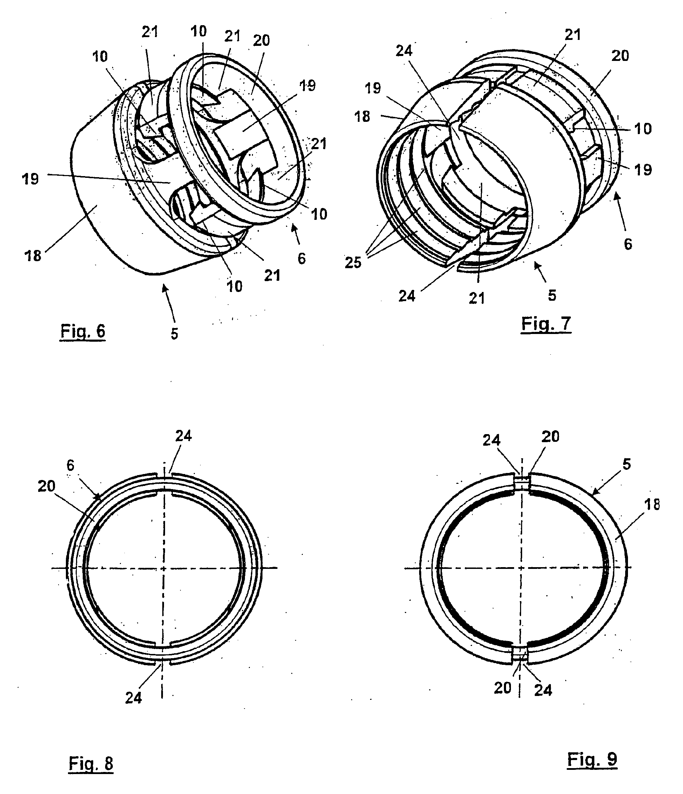

Die detaillierte Konstruktion der aus Klemmelement 5 und Krallement 6 bestehenden Einheit geht aus den Figuren 6 bis 12 hervor. Wie in diesen Figuren gezeigt wird, ist das Klemmelement 5 in Form einer an seiner Außenseite konischen Hülse 18 ausgebildet, die sich in Richtung auf das freie Ende 7 des Fixierteils 2 (vgl. Figuren 1 bis 3) hin verjüngt, wobei die konische Außenseite des Klemmelements 5 mit dem entsprechend konischen Bereich 15 der Innenseite des Fixierteils 2 zusammenwirkt.

Das als konische Hülse 18 ausgebildete Klemmelement 5 ist über zwei axial verlaufende Stege 19 mit dem Krallelement 6 einstückig verbunden. Das einstückig aus dem Klemmelement 5 und dem Krallelement 6 bestehende Teil ist aus einem Hochleistungskunststoff (PPSU) als Spritzgussteil gefertigt.

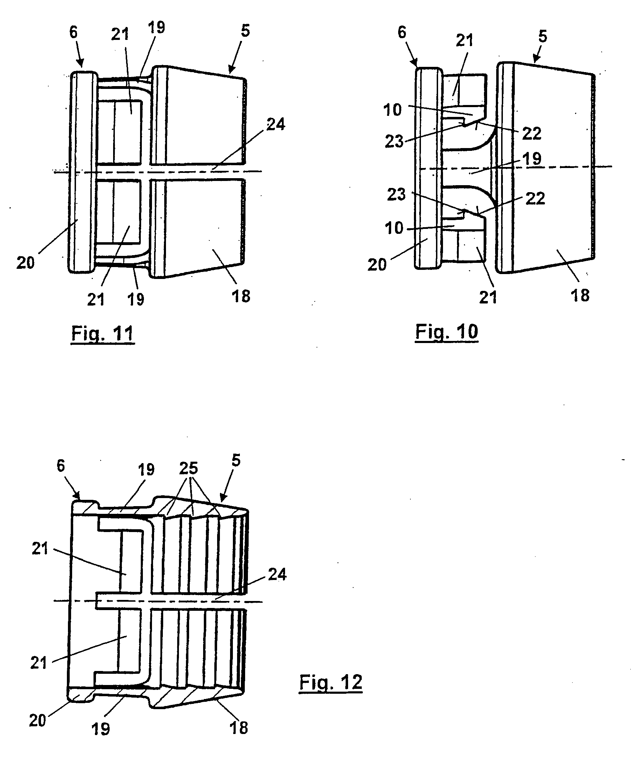

Das Krallelement 6 ist seinerseits als ein ringförmiges Teil 20 ausgebildet, von dem aus sich in axialer Richtung zum Klemmelement 5 hin jeweils zwei Finger 21 erstrecken. An den freien Enden der Finger 21 ist jeweils eine sich radial einwärts erstreckende Kralle 10 angeordnet. Wie aus Figur 10 hervorgeht, sind die Innenseiten 22 der Krallen 10 von den Enden der Finger 21 ausgehend einwärts in Richtung des Ringteils 20 des Krallelements 6 geneigt und weisen eine im Wesentlichen radiale zum Ringteil 20 weisende Flanke 23 auf.

Wie weiterhin in den Figuren 6 bis 12 gezeigt ist, weist das in Form einer konischen Hülse 18 ausgebildete Klemmelement 5 zwei diagonal gegenüberliegende Schlitze 24 auf, die in einem Winkel von 90° zu den benachbarten diagonal zueinander angeordneten Stegen 19 verlaufen.

Die radial innen liegende Seite der Finger 21 und im Wesentlichen auch die radial innen liegende Seite der Stege 19 sind fluchtend zu den Innenseiten des ringförmigen Teils 20 des Krallelements 6 und der radial innen liegenden Seite des als konische Hülse 18 ausgebildeten Klemmelements 5 angeordnet. Die Finger 21 und insbesondere die Stege 19 weisen eine dünnere Wandstärke gegenüber dem ringförmigen Teil 20 des Krallelements 6 und der konischen Hülse 18 des Klemmelements 5 auf. Somit ist der Außendurchmesser der ringförmig angeordneten Finger 21 und Stege 19 kleiner als der des Krallelements 6 und des Klemmelements 5.

Weiterhin ist der Außendurchmesser des Krallelements 6 etwas kleiner als der größte Außendurchmesser der konischen Hülse 18 des Klemmelements 5.

Wie in den Figuren 7 und 12 gezeigt ist, weist das hülsenförmige Klemmelement 5 an seiner Innenseite mehrere axial beabstandete, in Umfangsrichtung verlaufende Vorsprünge 25 auf.

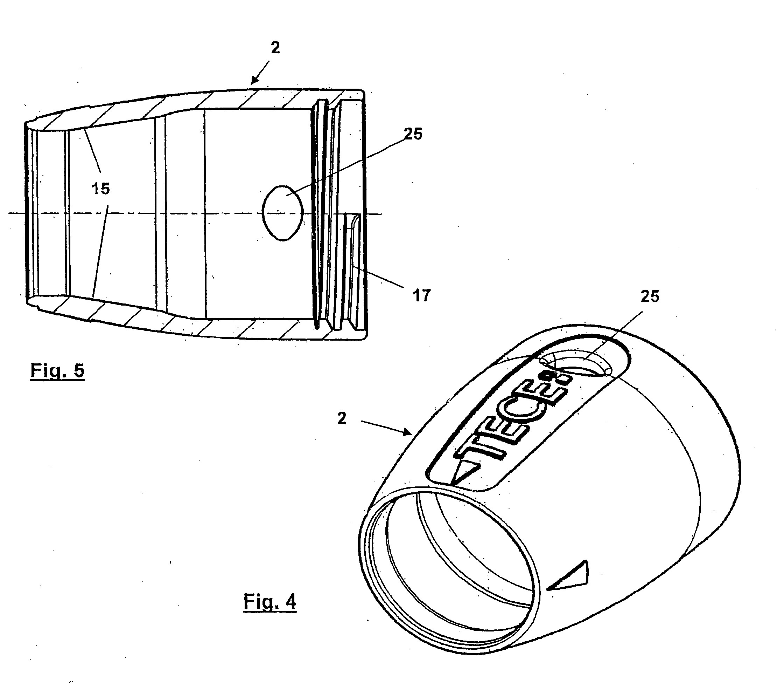

Die aus Klemmelement 5 und Krallelement 6 bestehende Einheit ist aus transparentem Hochleistungskunststoff (PPSU) gefertigt, weiterhin ist das hülsenförmige Fixierteil 2, wie in den Figuren 4 und 5 gezeigt, mit Sichtlöchern 26 versehen. Durch die Sichtlöcher 26 ist das transparente Krallelement 6 sichtbar. Wird die Rohrleitung 4 auf den Stützkörper 1 aufgesteckt, so kann anhand der Sichtlöcher 26 durch das transparente Krallelement 6 hindurch die Einstecktiefe genau kontrolliert werden.

### Bezugszeichenliste

- 1: Stützkörper
- 2: Fixierteil
- 3: freies Ende der Rohrleitung
- 4: Rohrleitung
- 5: Klemmelement
- 6: Krallelement
- 7: freies Ende des Fixierteils
- 8: nach innen weisender Wandbereich
- 9: Außenseite
- 10: Kralle
- 11: Dichtring
- 12: Nut
- 13: zweite Rohrleitung
- 14: zweites Fixierteil
- 15: konischer Bereich
- 16: Außengewinde
- 17: Innengewinde
- 18: konische Hülse
- 19: Steg
- 20: ringförmiges Teil
- 21: Finger
- 22: Innenseite
- 23: Flanke
- 24: Schlitz
- 25: Vorsprung
- 26: Sichtloch

## Patentansprüche

1. Steckverbinder mit einem Stützkörper (1), einem Fixierteil (2) zur Befestigung eines freien Endes (3) einer Rohrleitung (4) auf dem Stützkörper (1), einem zwischen dem Fixierteil (2) und einem Bereich des Stützkörpers (1), auf den die Rohrleitung (4) aufsteckbar ist, angeordneten Klemmelement (5), das relativ zum Fixierteil (2) in Richtung auf dessen freies Ende (7) hin axial bewegbar ist und infolge dieser i3ewegung ein radial nach innen weisender Wandbereich (8) des Klemmelements (5) gegen die Außenseite (9) der Rohrleitung (4) pressbar ist, und einem innerhalb des Fixierteils angeordneten Krallelement (6), das an seiner radial nach innen weisenden Seite mindestens eine Kralle (10) zum Eingriff in oder Anpressen an die Außenseite (9) der Rohrleitung (4) aufweiset, die so ausgelegt ist, dass das freie Ende (3) der Rohrleitung (4) nach Befiestigung des Fixierteits (2) am Stützkörper (1) auf diesen aufsteckbar und dabei durch die Kralle (10) nicht oder in einem nur unerheblichen Maße beschädigbar ist, **dadurch gekennzeichnet, dass** das Krallelement (6) mit dem Klemmelement (5) derart einstückig verbunden ist, dass bei radial einwärts gerichteter Bewegung des nach innen weisenden Wandbereichs (8) des Klemmelements (5) die von der Kralle (10) auf die Rohrleitungsoberfläche übertragene Kraft im Wesentlichen konstant ist, so dass die Rohrleitungsoberfläche durch die Kralle (10) nicht oder nur unerheblich beschädigfaar ist.

2. Steckverbinder nach Anspruch 1, **dadurch gekennzeichnet, dass** die Kralle (10) radial einwärts über den nach innen weisenden Wandbereich (8) des Klemmelements (5) vorsteht.

3. Steckverbinder nach einem der Ansprüche 1 bis 2, **dadurch gekennzeichnet, dass** das Kiemmeelement (5) und das Krallelement (6) aus Kunststoff gefertigt sind.

4. Steckverbinder nach Anspruch 3, **dadurch gekennzeichnet, dass** das Klemmelement (5) und das Krallelement (6) einstückig als Spritzgussteil gefertigt sind.

5. Steckverbinder nach einem der Ansprüche 1 bis 4, **dadurch gekennzeichnet, dass** das Krallelement (6) an der vom freien Ende (7) des Fixierteils (2) weg weisenden Seite des Klemmelements (5) angeordnet ist.

6. Steckverbinder nach einem der Ansprüche 1 bis 5, **dadurch gekennzeichnet, dass** das Klemmelement (5) in Form einer an seiner Außenseite konischen Hülse (18) ausgebildet ist, die sich in Richtung auf das freie Ende (7) des Fixierteils (2) hin verjüngt, wobei die konische Außenseite des Klemmelements (5) mit einem entsprechend konischen Bereich (15) der .Innenseite des Fixierteils (2) korrespondiert.

7. Steckverbinder nach einem der Ansprüche 1 bis 6, **dadurch gekennzeichnet, dass** das Krallelement (6) über mindestens einen in radialer Richtung flexiblen Steg (19) mit dem Klemmelement (5) verbunden ist.

8. Steckverbinder nach Anspruch 7, **dadurch gekennzeichnet, dass** das Krallelement (6) ein ringförmiges Teil (20) aufweist, von dem aus sich in axialer Richtung Finger (21) erstrecken, an deren radial einwärts liegenden Innenseiten jeweils eine Kralle (10) angeordnet ist.

9. Steckverbinder nach Anspruch 8, **dadurch gekennzeichnet, dass** die Finger (21) sich in Richtung auf das Klemmelement (5) hin erstrecken und die Krallen (10) im Bereich der freien Enden der Finger (21) angeordnet sind.

10. Steckverbinder nach Anspruch 9, **dadurch gekennzeichnet, dass** der Außendurchmesser des Ringteils (20) des Krallelements (6) kleiner ist als der größte Außendurchmesser des Klemmelements (5).

11. Steckverbinder nach Anspruch 10, **dadurch gekennzeichnet, dass** an zwei diagonal ge-genüberliegenden Stellen der Stirnseite des Klemmelements (5) mit größerem Außendurchmesser jeweils ein sich axial erstreckender Steg (19) vorgesehen Ist, der an dem Ringteil (20) des Krallelements (6) endet, wobei zwischen den beiden Stegen (19) sich jeweils mindestens ein Finger (21) des Krallelements (6) erstreckt.

12. Steckverbinder nach Anspruch 10 oder 11, **dadurch gekennzeichnet, dass** die Außenseite des Klemmelements (5) mit dem größten Außendurchmesser radial nach außen gegenüber den Stegen (19) vorsteht.

13. Steckverbinder nach einem der Ansprüche 10 bis 12, **dadurch gekennzeichnet, dass** die Innenseiten (22) der Krallen (10) von den Enden der Finger (21) einwärts geneigt in Richtung des Ringteils (20) des Krallelements (6) verlaufen und eine im Wesentlichen radiale zum Ringteil (20) weisende Flanke (23) aufweisen.

14. Steckverbinder nach einem der Ansprüche 1 bis 13, **dadurch gekennzeichnet, dass** das Klemmelement (5) an seiner Innenseite mindestens einen Vorsprung (25) aufweist.

## Claims

1. Plug-in connector, comprising a supporting body (1), fixing part (2) for fixing a free end (3) of a pipeline (4) on said supporting body (1), a clamping element (5) disposed between the fixing part (2) and a part of the supporting body (1) to which the pipeline (4) can be attached, the clamping element (5) being axially movable relative to the fixing part (2) towards the free end (7) thereof and a radially inwardly facing wall portion (8) of the clamping element (5) being arranged for being pressed against the exterior side (9) of the pipeline (4) as a result of that movement, and comprising a gripping element (6) arranged within the fixing part which comprises on its radially inwardly facing side at least one claw (10) for being engaged with or pressed against the outer face (9) of the pipeline (4), which is designed in such a manner that the free end (3) of the pipeline (4) after the fixing of the fixing part (2) to the supporting body (1) can be attached to the same while not being damaged or only slightly damaged by the claw (10), **characterized in that** the gripping element (6) is integrally connected to the clamping element (5) in such a manner that during a radially inwardly directed movement of the inwardly facing wall portion (8) of the clamping element (5) the force transmitted from the claw (10) to the surface of the pipeline is substantially constant so that the surface of the pipeline cannot be damaged or only damaged to a negligible extent by the claw (10).

2. Plug-in connector according to claim 1, **characterized in that** the claw (10) radially inwardly protrudes over the inwardly facing wall portion (8) of the clamping element (5).

3. Plug-in connector according to one of the claims 1 to 2, **characterized in that** the clamping element (5) and the gripping element (6) are fabricated from a synthetic material.

4. Plug-in connector according to claim 4, **characterized in that** the clamping element (5) and the gripping element (6) are integrally formed as an injection molded part.

5. Plug-in connector according to one of the claims 1 to 4, **characterized in that** the gripping element (6) is disposed on the side of the clamping element (5) facing away from the free end of the fixing part (2).

6. Plug-in connector according to one of the claims 1 to 5, **characterized in that** the clamping element (5) is formed as conical sleeve (18) on the outer face thereof, which conical sleeve tapers towards the free end (7) of the fixing part (2), wherein the conical outer face of the clamping element (5) corresponds with a conforming conical portion (15) of the inner face of the fixing part.

7. Plug-in connector according to one of the claims 1 to 6, **characterized in that** the gripping element (6) is connected to the clamping element (5) by at least one web (19) that is flexible in the radial direction.

8. Plug-in connector according to claim 7, **characterized in that** the gripping element (6) comprises a ring member (20) where fingers (21) extend from in the axial direction, a claw (10) being respectively arranged on the radially inwardly situated inner faces of said fingers.

9. Plug-in connector according to claim 8, **characterized in that** the fingers (21) extend towards the clamping element (5) and the claws (10) are disposed in the region of the free ends of the fingers (21).

10. Plug-in connector according to claim 9, **characterized in that** the outer diameter of the ring member (20) of the gripping element (6) is smaller than the largest outer diameter of the clamping element (5).

11. Plug-in connector according to claim 10, **characterized in that** an axially extending web (19) is respectively provided on two diametrically opposite positions of the front face of the clamping element (5) having the larger diameter, said web terminating at the ring member (20) of the gripping element (6), wherein at least one finger (21) of the gripping element (6) respectively extends between said two webs (19).

12. Plug-in connector according to claim 10 or 11, **characterized in that** the outer face of the clamping element (5) having the largest outer diameter radially outwardly protrudes with respect to the webs (19).

13. Plug-in connector according to one of the claims 10 to 12, **characterized in that** the inner faces (22) of the claws (10) extend in an inwardly inclined fashion from the ends of the fingers (21) towards the ring member (20) of the gripping element (6) and comprise a substantially radial flank (23) that faces towards the annular part (20).

14. Plug-in connector according to one of the claims 1 to 13, **characterized in that** the clamping element (5) has at least one protrusion (25) on the inner face thereof.

## Revendications

1. Connecteur enfichable comprenant un corps de support (1), une pièce de fixation (2) servant à la fixation d'une extrémité libre (3) d'une conduite (4) au corps de support (1), un élément de serrage (5) disposé entre la pièce de fixation (2) et une partie du corps de support (1), dans lequel corps de support la conduite (4) peut être enfichée, l'élément de serrage (5) étant mobile axialement par rapport à la pièce de fixation (2) dans la direction de son extrémité libre (7) et une partie de paroi (8) de l'élément de serrage (5) tournée vers l'intérieur pouvant être pressée contre la surface extérieure (9) de la conduite (4) à la suite de ce mouvement, et comprenant un élément de grippage (6) disposé dans la pièce de fixage et comportant, sur son côté radialement tourné vers l'intérieur, au moins une griffe (10) destinée à être engagée sur ou pressée contre la surface extérieure (9) de la conduite (4) et agencée de sorte que l'extrémité libre (3) de la conduite (4) peut, après la fixation de la pièce de fixation (2) sur le corps de support (1), être enfichée dans le corps de support, l'extrémité libre de la conduite n'étant endommagée que faiblement ou pas du tout par la griffe (10), **caractérisé en ce que** l'élément de grippage (6) peut être connecté à l'élément de serrage (5) en une pièce de sorte que lors d'un mouvement vers l'intérieur de la partie de paroi (8) de l'élément de serrage (5) tournée vers l'intérieur la force transmise de la griffe (10) à la surface de la conduite est essentiellement constante de sorte que la surface de la conduite ne peut être endommager que faiblement ou pas du tout par la griffe (10).

2. Connecteur enfichable selon la revendication 1, **caractérisé en ce que** la griffe (10) radialement dépasse vers l'intérieur la partie de paroi (8) de l'élément de serrage (5) tournée vers l'intérieur.

3. Connecteur enfichable selon l'une des revendications 1 à 2, **caractérisé en ce que** l'élément de serrage (5) et l'élément de grippage (6) sont fabriqués en matière plastique.

4. Connecteur enfichable selon la revendication 3, **caractérisé en ce que** l'élément de serrage (5) et l'élément de grippage (6) sont fabriqués comme une pièce monobloc moulée par injection.

5. Connecteur enfichable selon l'une des revendications 1 à 4, **caractérisé en ce que** l'élément de grippage (6) est disposé sur le côté de l'élément de serrage (5) opposé à l'extrémité libre (7) de l'élément de fixation (2).

6. Connecteur enfichable selon l'une des revendications 1 à 5, **caractérisé en ce que** l'élément de serrage (5) est configuré sur sa surface extérieure sous la forme d'un manche conique (18) se réduisant vers l'extrémité libre (7) de l'élément de fixage (7), ladite surface extérieure conique de l'élément de serrage (5) correspondant avec une partie (15) conformément conique de la face intérieure de l'élément de fixation (2).

7. Connecteur enfichable selon l'une des revendications 1 à 6, **caractérisé en ce que** l'élément de grippage (6) est connecté à l'élément de serrage (5) par l'intermédiaire d'au moins une traverse (19) flexible dans la direction radiale.

8. Connecteur enfichable selon la revendication 7, **caractérisé en ce que** l'élément de grippage (6) comporte une pièce annulaire (20) avec des doigts (21) s'étendant de cette pièce annulaire, et une griffe (10) étant disposée sur chacune des faces intérieures des doigts étant situées radialement vers l'intérieur.

9. Connecteur enfichable selon la revendication 8, **caractérisé en ce que** les doigts (21) s'étendent vers l'élément de serrage (5) et **en ce que** les griffes (10) sont arrangées dans la zone des extrémités labres des doigts (21).

10. Connecteur enfichable selon la revendication 9, **caractérisé en ce que** le diamètre extérieur de la pièce annulaire (20) de l'élément de grippage (6) est plus petit que le plus grand diamètre extérieur de l'élément de serrage (5).

11. Connecteur enfichable selon la revendication 10, **caractérisé en ce qu'**une traverse (19) s'étendant axialement est respectivement prévue aux deux positions diagonalement opposées de la face frontale de l'élément de serrage (5) avec le diamètre plus grand, ladite traverse se terminant à la pièce annulaire (20) de l'élément de grippage (6), et au moins un doigt (21) de l'élément de grippage (6) s'étendant entre les deux traverses (19).

12. Connecteur enfichable selon les revendications 10 ou 11, **caractérisé en ce que** la face extérieure de l'élément de serrage (5) ayant le diamètre plus grand fait radialement saillie vers l'extérieur par rapport aux traverses (19).

13. Connecteur enfichable selon l'une des revendications 10 à 12, **caractérisé en ce que** les faces intérieures (22) des griffes (10) s'étendent, de manière inclinée vers l'intérieur, des extrémités des doigts (21) vers la pièce annulaire (20) de l'élément de grippage (6) et comportent un flanc (23) essentiellement radialement tourné vers la pièce annulaire (20).

14. Connecteur enfichable selon l'une des revendications 1 à 13, **caractérisé en ce que** l'élément de serrage (5) comporte sur sa face intérieure au moins un épaulement (25).
